# EUROPEAN PATENT APPLICATION

(11) **EP 1 562 339 A1**
(43) Date of publication of application: **10.08.2005**
(21) Application number: 04029617.0
(22) Date of filing: 15.12.2004
(51) Int. Cl.: H04L 12/58

(54) **Peer-to-peer-e-mail**

(30) Priority: 23.12.2003 US 744435
(71) Applicant: ALCATEL, 75008 Paris (FR)
(72) Inventor: Ozugur, Timucin, TX 75042 Garland (US)
(74) Representative: Schäfer, Wolfgang, Dipl.-Ing.

(57) **Abstract**

E-mail service for an enterprise is provided by utilizing data storage capacity already available within the enterprise to store e-mail temporarily if the intended e-mail recipient is unable to receive the e-mail. This temporary e-mail storage, and ultimate delivery of the e-mail to its intended destination, can both be coordinated by control signaling that is internal to the enterprise. This provides the enterprise with e-mail service without using an external e-mail exchange server.

## Description

### FIELD OF THE INVENTION

The invention relates generally to data communication in computer networks and, more particularly, to e-mail communication in computer networks.

### BACKGROUND OF THE INVENTION

Conventional e-mail systems are typically structured as client/server-based systems. This means that enterprises (e.g., businesses or other organizations) that wish to utilize e-mail must obtain the support of an appropriate e-mail exchange server. The licensing costs involved in obtaining the support of an e-mail exchange server can be rather expensive. For a relatively small enterprise (for example, a business with 2-100 employees), the licensing costs for e-mail exchange server support can be quite high when considered on a per employee basis.

It is therefore desirable to provide for e-mail service at a lower cost than the licensing costs associated with e-mail exchange servers.

Exemplary embodiments of the present invention utilize data storage capacity already available within an enterprise's computer network to store temporarily an e-mail whose intended recipient computer is unavailable. This temporary e-mail storage, as well as ultimate delivery of the e-mail to its intended destination, can be coordinated by control signaling that is internal to the enterprise's computer network. This provides the network with e-mail service which, at little added cost, eliminates the need for an external e-mail exchange server and its associated costs.

### BRIEF DESCRIPTION OF THE DRAWINGS

FIGURE 1 diagrammatically illustrates exemplary procedures for delivery of an e-mail to its intended recipient in exemplary embodiments of a peer-to-peer e-mail system according to the invention.
FIGURE 2 diagrammatically illustrates exemplary procedures for temporary storage of an e-mail whose intended recipient is unavailable in exemplary embodiments of a peer-to-peer e-mail system according to the invention.
FIGURE 3 illustrates exemplary operations which can be performed by the e-mail proxy of FIGUREs 1 and 2.
FIGURE 4 diagrammatically illustrates exemplary embodiments of a data processing apparatus according to the invention capable of performing the operations of FIGURE 3.
FIGURE 5 illustrates exemplary operations which can be performed by any of the computers illustrated in FIGUREs 1 and 2.
FIGURE 6 diagrammatically illustrates exemplary embodiments of a data processing apparatus according to the invention capable of performing the operations of FIGURE 5.

### DETAILED DESCRIPTION

Exemplary embodiments of the invention provide a SIP-based peer-to-peer e-mail system. An e-mail is sent by a computer or other data processing apparatus associated with the originator of the e-mail. The e-mail is received at an e-mail proxy, and this e-mail proxy begins the e-mail delivery process by sending a SIP INVITE message to make sure that the computer (as used herein, "computer" can include any type of data processing apparatus, e.g., a handheld, laptop, or desktop computer, a router, etc.) associated with the e-mail's intended recipient is powered-up and able to receive e-mail. If the intended destination computer is powered-down or otherwise out-of-service, or if the intended destination computer is out of memory, then another computer within the enterprise temporarily stores the e-mail on behalf of the intended recipient. This temporary storage computer then uses SIP NOTIFY messages to periodically notify the intended destination computer that the temporary storage computer is holding an e-mail for the intended destination computer.

Some embodiments of the invention perform the following exemplary operations in order to effectuate peer-to-peer e-mail operations:
1. The e-mail originator sends the e-mail to its intended recipient;
2. The e-mail proxy within the enterprise receives the e-mail, and initiates a SIP INVITE message to the intended recipient;
3. If the intended recipient's computer is powered up and has enough memory available, the intended recipient sends a SIP 200 OK message back to the e-mail proxy; and
4. The e-mail proxy sends the e-mail to the intended recipient.

After operation 2 above, some exemplary embodiments may execute the following exemplary alternative operations as conditions warrant:
3A. If the intended recipient's computer is powered-down or does not have enough memory available, then the intended recipient's computer does not send a SIP 200 OK message, and the e-mail proxy times out.
4A. After the e-mail proxy times out, it sends a SIP INVITE message to another computer in the enterprise, (using, for example, the IP address of that computer). If that computer is powered-up and has enough available memory, it sends a SIP 200 OK message back to the e-mail proxy.
5. The e-mail proxy then sends the e-mail to the computer from which the 200 OK message was received, for temporary storage in that computer. The user of the temporary storage computer may be prevented from reading the area of memory where the e-mail is stored.
6. The temporary storage computer periodically sends a SIP NOTIFY message to the intended recipient computer in order to notify the intended recipient computer that the temporary storage computer is storing an e-mail for the intended recipient computer.
7. If the temporary storage computer receives a 200 OK message from the intended recipient computer, then the temporary storage computer sends the e-mail to the intended recipient computer.
8. If the temporary storage computer is about to power-down, and has not yet received a 200 OK message from the intended recipient computer in response to any of the periodic NOTIFY messages, then the temporary storage computer sends a SIP INVITE message to a further computer in the enterprise in order to determine whether that further computer can provide temporary storage for the intended recipient's e-mail.
9. If a 200 OK message is received from the further computer, then the computer which is about to power-down sends the intended recipient's e-mail to the further computer for temporary storage.

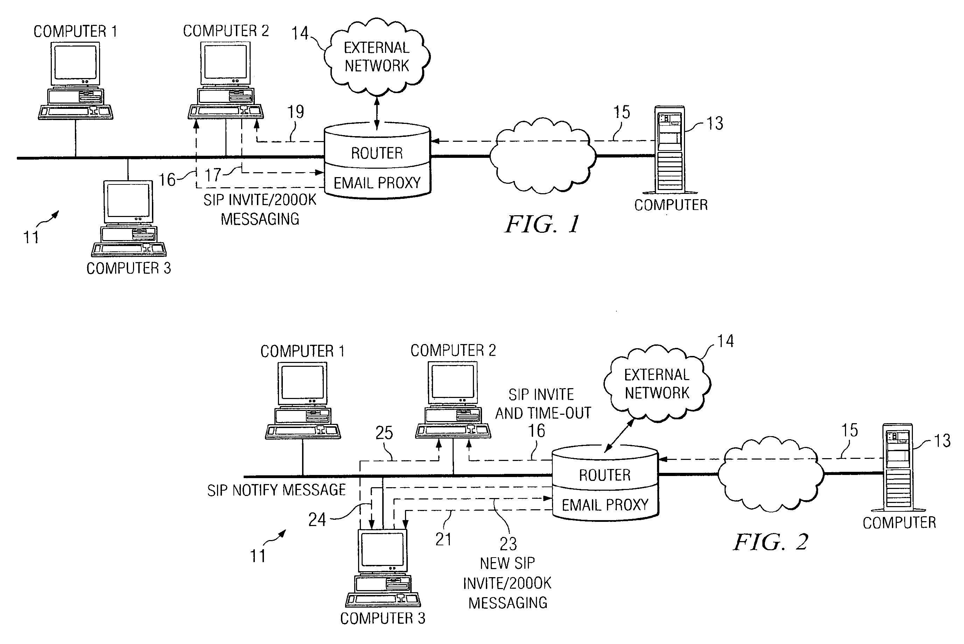

FIGURE 1 diagrammatically illustrates exemplary embodiments of a computer network 11 with peer-to-peer e-mail capabilities according to the present invention. The computer network 11 can be, in some exemplary embodiments, an ethernet LAN including a plurality of computers for supporting anywhere from about 2 to about 100 employees of a given enterprise. The network 11 includes a router which provides communication connectivity between network 11 and another, external computer network 14 such as the Internet. In the network 11, the aforementioned e-mail proxy is implemented on the router. In FIGURE 1, the user of a computer 13 has originated an e-mail for delivery to computer 2. At 15, the e-mail is received by the e-mail proxy. At 16, the e-mail proxy sends a SIP INVITE message to computer 2, and at 17 the e-mail proxy receives a corresponding 200 OK message from computer 2, before the e-mail proxy times out. In this situation, the e-mail proxy sends the e-mail to computer 2 at 19.

FIGURE 2 diagrammatically illustrates exemplary embodiments of a computer network similar to FIGURE 1, but FIGURE 2 illustrates the situation where the e-mail proxy sends a SIP INVITE message to computer 2 at 16, but times out before receiving a corresponding 200 OK message from computer 2. In this situation, the e-mail proxy at 21 sends a further SIP INVITE message to computer 3 at 24. Before the e-mail proxy times out, it receives at 23 a corresponding 200 OK message from computer 3. In response to this 200 OK message, the e-mail proxy sends the e-mail to computer 3 for temporary storage until computer 2 (the intended destination) can receive the e-mail. Once computer 3 has received and stored the e-mail, computer 3 at 25 periodically sends SIP NOTIFY messages to computer 2 in order to notify computer 2 that computer 3 is temporarily storing an e-mail for computer 2.

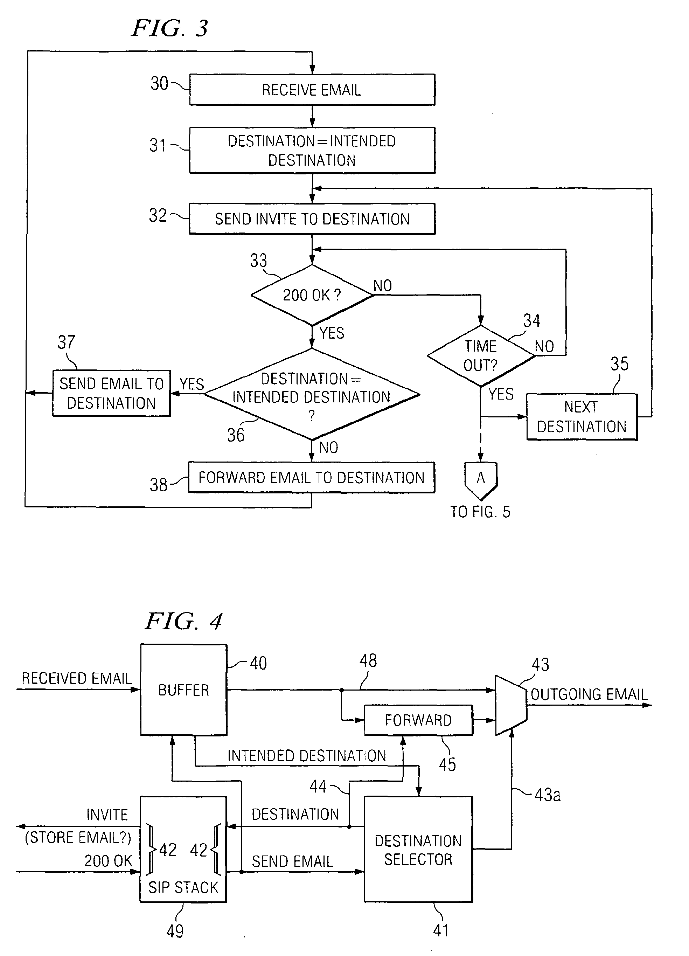

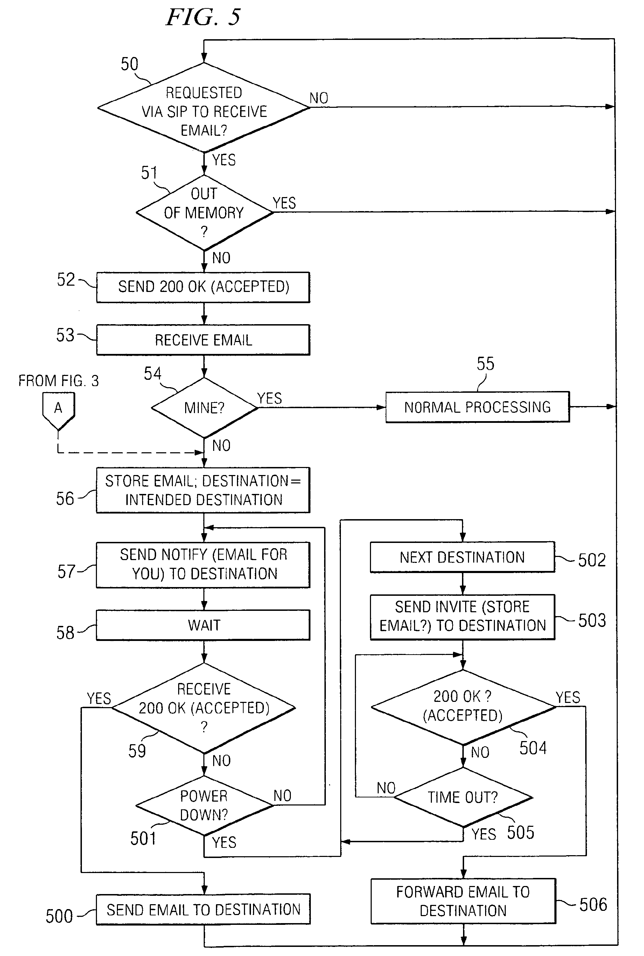

FIGURE 3 illustrates exemplary operations which can be performed by the e-mail proxy of FIGUREs 1 and 2. After receiving an e-mail at 30, the e-mail proxy at 31 defines a destination address variable (dest) to be the intended destination address of the received e-mail. Thereafter at 32, the e-mail proxy sends a SIP INVITE message to the intended destination computer. At 33 and 34, if a SIP 200 OK message is not received before a time out, then the destination address variable is changed from the intended destination address to another destination address associated with another computer within the enterprise's internal data network. This destination address produced at 35 identifies a candidate for temporarily storing the e-mail. Thereafter, the operations at 32-35 continue until a 200 OK message is received at 33. At 36, if the 200 OK message was received from the intended destination computer, then the e-mail is sent to the intended destination computer at 37. Otherwise, if at 36 the 200 OK message was received from a computer other than intended destination computer, then the e-mail is forwarded to that other computer at 38 for temporary storage. After the e-mail has been disposed of at 37 or 38, operations return to 30.

FIGURE 4 diagrammatically illustrates exemplary embodiments of a data processing apparatus (e.g., the router of FIGUREs 1 and 2) that can implement the e-mail proxy in the data communication network of FIGUREs 1 and 2. In some embodiments, the data processing apparatus of FIGURE 4 can perform the exemplary operations illustrated in FIGURE 3. More specifically, after a received e-mail is buffered at 40, a destination selector 41 sets a destination address variable (dest) to be the intended destination (int.dest.) address of the buffered e-mail, generally corresponding to operation 31 of FIGURE 3. A conventional SIP stack 49 and the destination selector 41 are cooperable for supporting the signaling illustrated at 42 in order to implement the operations illustrated at 32-35 of FIGURE 3. When the 200 OK message is received by the SIP stack 49, a "send e-mail" signal is applied to the destination selector 41. In response to the "send e-mail" signal, destination selector 41 produces a signal 43A which controls a further selector 43 to implement the decision operation at 36 of FIGURE 3. That is, if the signal 43A indicates that the destination which has responded with a 200 OK message is the intended e-mail destination, then the e-mail from buffer 40 is sent on path 48 through selector 43 (see also 37 in FIGURE 3). Otherwise, signal 43A controls selector 43 such that the e-mail from buffer 40 is, by operation of a conventional forwarding module 45, sent as a forwarded e-mail to the destination address designated at 44 (see also 38 in FIGURE 3).

FIGURE 5 illustrates exemplary operations which can be performed by any of the computers illustrated in FIGUREs 1 and 2. It is initially determined at 50 whether the computer has been requested via SIP messaging about its availability to receive an e-mail. Such a request can arise in three ways. In one situation, the computer can receive a SIP INVITE message requesting the computer's availability to receive its own e-mail from the e-mail proxy, in a second situation the computer can receive a SIP INVITE message to request the computer's availability to receive and temporarily store an e-mail that is intended for another recipient, and in a third situation the computer can receive a SIP NOTIFY message requesting the computer's availability to receive its own e-mail from a temporary storage computer where that e-mail has been temporarily stored.

After the request has been received at 50, the computer determines at 51 whether it has enough available memory to receive and store the e-mail. If the computer is out of memory, then operations return to 50. Otherwise, the computer sends a SIP 200 OK message at 52 to indicate that the computer is available, the request has been accepted, and the e-mail can be delivered. After the e-mail is received at 53, it is determined at 54 whether or not the computer is the intended destination of the received e-mail. If so, then the e-mail is passed to normal incoming e-mail processing at 55, after which operations return to 50. Otherwise, if the computer is not the intended destination of the received e-mail, then at 56 the received e-mail is stored, and a destination address variable (dest) is set to the address of the computer that is the intended destination of the received e-mail.

At 57, a SIP NOTIFY message is sent to the destination address indicating to the recipient that the computer has an e-mail for delivery to the recipient. If, after a predetermined period of time at 58, a SIP 200 OK message has not been received at 59 to indicate availability for delivery of the e-mail, and if the computer is not preparing to power down at 501, then the operations at 57-59 are repeated until either a 200 OK message is received or it is determined at 501 that the computer is about to power down. If a 200 OK message is received at 59 before any indication that the computer will power down at 501, then the e-mail is sent to the destination address at 500, after which operations return to 50.

If an impending power down is indicated at 501, then at 502 the destination address variable is updated to another destination address of another computer within the enterprise's computer network. The destination address produced at 502 thus identifies a candidate for temporarily storing the e-mail. Thereafter at 503, a SIP INVITE message is sent to the destination address to request the availability of the computer at the destination address to store the original e-mail temporarily for the intended recipient. If a corresponding 200 OK message accepting the e-mail is received at 504 before a time out occurs at 505, then the original e-mail is forwarded to the destination address at 506 for temporary storage, after which operations return to 50. If a 200 OK message is not received at 504 before a time out occurs at 505, then the destination address variable is updated at 502 to the address of another temporary storage candidate computer in the enterprise's computer network, and a corresponding SIP INVITE message is sent at 503 to the new candidate at the updated destination address. The operations at 502-504 can be repeated until a 200 OK response corresponding to the INVITE message of 503 is received at 504 before a time out occurs at 505.

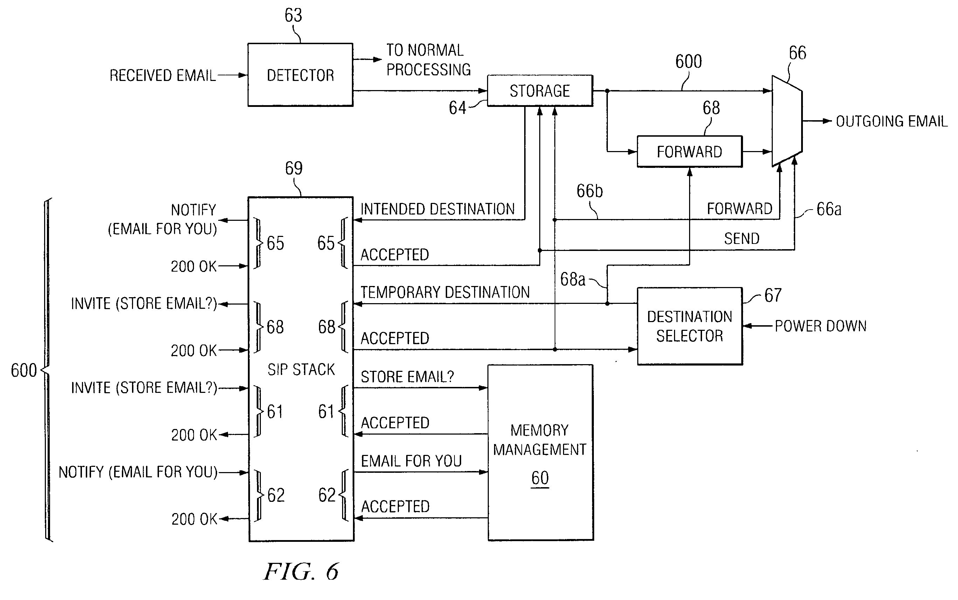

FIGURE 6 diagrammatically illustrates exemplary embodiments of a data processing apparatus which can perform the exemplary operations illustrated in FIGURE 5. A conventional SIP stack 69 interfaces communication signals from a communication port 600 to a storage memory apparatus 64, a destination selector 67, an e-mail routing selector 66, and a memory manager 60. The SIP stack signaling illustrated generally at 61 and 62 is cooperable with the memory manager 60 for performing operations generally in correspondence with the above-described operations illustrated at 50-52 of FIGURE 5. After the memory manager 60 has accepted a proposed e-mail, the e-mail is received and applied to a detector 63 which can perform the above-described operation illustrated at 54 in FIGURE 5. A storage apparatus 64 stores the e-mail and provides the intended destination address of that e-mail, in general correspondence to the above-described operations illustrated at 56 in FIGURE 5. The signaling illustrated at 65 in FIGURE 6 generally corresponds to the above-described operations illustrated at 57-59 and 501 (N) in FIGURE 5. The storage apparatus 64 is cooperable with the outgoing e-mail routing selector 66 and control signal 66A from SIP stack 69 for sending the original e-mail out on path 600 to its intended destination address, in general correspondence to the above-described operation at 59 (Y) and 500 in FIGURE 5.

The destination selector 67 is operable for selecting temporary destination addresses which identify other computers in the enterprise's data network that are candidates to provide temporary storage of the received e-mail. In response to an indication that the data processing apparatus will soon power down, the destination selector 67 is cooperable with the SIP stack 69 for effectuating the signaling illustrated generally at 68, thereby effectuating the above-described operations illustrated generally at 502-505 of FIGURE 5. The control signal 66B is responsive to the signaling at 68 for causing the original e-mail to be routed from storage 64 through selector 66 to the outgoing e-mail output via a forwarding module 68. The forwarding module 68 uses conventional techniques to send the original e-mail as a forwarded e-mail to the current temporary destination address provided at 68A by the destination selector 67 (see also 506 in FIGURE 5).

In some embodiments, the e-mail proxy can be implemented on a dedicated computer of the enterprise's internal computer network rather than on the router of FIGUREs 1 and 2. In some embodiments, the dedicated computer which implements the e-mail proxy can also be used as a dedicated computer for temporary storage of e-mails whose intended destination computers are powered down, out of service or out of memory. In these latter embodiments, operations can proceed from 34 (Y) of FIGURE 3 to 56 of FIGURE 5, as shown by broken line in FIGUREs 3 and 5.

In other embodiments, the e-mail proxy can be implemented on a first dedicated computer within the enterprise's data network, and a further computer can be dedicated for temporarily storing e-mails enroute to their intended destination computers. In some examples of such embodiments, the dedicated e-mail proxy computer can perform the exemplary operations described above with respect to FIGUREs 3 and 4, and the dedicated temporary storage computer can perform the exemplary operations described above with respect to FIGUREs 5 and 6.

It will be evident to workers in the art that the embodiments described above with respect to FIGUREs 1-6 can be readily achieved by, for example, suitably modifying software, hardware, or both in conventional computers and routers.

The following computer apparatus and/or apparatus features and/or the following computer network/s and/or network features as well as the following method/s and/or method steps also constitute advantageous embodiments of the claimed and/or described invention:
- The claimed and/or described method, wherein said periodically notifying step includes the second computer periodically notifying the first computer that the e-mail is available for delivery to the first computer;
- The claimed and/or described method, including determining that the second computer is to be powered down, and thereafter determining, independently of the at least one further computer network, whether a third computer in the first computer network is available to receive the e-mail from the second computer;
- The claimed and/or described method, wherein one of said steps of determining the availability of the first computer, determining the availability of the second computer, determining the availability of the third computer and periodically notifying the first computer includes using SIP messaging;
- The claimed and/or described method, wherein the first computer is the intended recipient of the e-mail;
- The claimed and/or described method, wherein the first computer is a candidate for temporarily storing the e-mail enroute to the intended recipient of the e-mail;
- A computer apparatus for operation in a first computer network that includes a plurality of computers and has data communication connectivity to at least one further computer network, comprising: a storage device for receiving and storing an e-mail whose intended recipient is a first computer within the first computer network; a communication interface for signaling to the first computer, independently of the at least one further computer network, that the e-mail is available for delivery to the first computer, said communication interface further for providing, independently of the at least one further computer network, an indication of whether the first computer is available to receive the e-mail; and said storage device coupled to said communication interface and responsive to an indication that the first computer is available for providing the e-mail for transmission to the first computer;
- The claimed and/or described apparatus, wherein said storage device is for receiving and storing the e-mail independently of the at least one further computer network;
- The claimed and/or described apparatus, wherein said communication interface is for periodically signaling to the first computer, independently of the at least one further computer network, that the e-mail is available for delivery to the first computer;
- The claimed and/or described apparatus, wherein said communication interface is further for signaling to a second computer in the first computer network, independently of the at least one further computer network, that the e-mail is available for delivery to the second computer, said communication interface further for providing an indication of whether the second computer is available to receive the e-mail;
- The claimed and/or described apparatus, wherein said communication interface includes a SIP stack, and said signaling includes SIP messaging;
- The claimed and/or described apparatus, provided as one of a handheld computer, a laptop computer, a desktop computer and a router;
- A computer network, comprising: a plurality of computers coupled for e-mail communication with one another; a communication connectivity apparatus coupled to said computers for providing data communication connectivity to at least one further computer network; and a first said computer and a second said computer coupled for communication signaling and cooperable independently of the at least one further computer network for signaling therebetween according to a predetermined signaling arrangement to permit said first computer to determine whether said second computer is available to receive an e-mail that said first computer has for transmission to said second computer;
- The described computer network, wherein said computer network includes a data storage apparatus coupled to said first computer, said first computer responsive to an indication from said signaling that said second computer is not available to receive the e-mail for transmitting the e-mail to said data storage apparatus for temporary storage therein;
- The described computer network, wherein said data storage apparatus includes a plurality of data storage devices in respective ones of said computers;
- The described computer network, provided as an ethernet LAN;
- The described computer network, wherein said signaling includes SIP messaging;
- The described computer network, wherein said plurality of computers includes at least about 2 computers and at most about 100 computers;
- A computer network, comprising: a plurality of computers coupled for e-mail communication with one another; a first said computer and a second said computer coupled for communication signaling and cooperable for signaling therebetween to permit said first computer to determine whether said second computer is available to receive an e-mail that said first computer has for transmission to said second computer; a third said computer including a data storage device; and said first computer responsive to an indication from said signaling that said second computer is not available to receive the e-mail for transmitting the e-mail to said third computer for temporary storage in said data storage device.

Although exemplary embodiments of the invention are described above in detail, this does not limit the scope of the invention, which can be practiced in a variety of embodiments.

## Claims

1. A method of providing e-mail service to computers within a first computer network that includes a plurality of computers and has data communication connectivity to at least one further computer network, comprising:
determining that an e-mail should be delivered to a first computer in the first computer network; and
independently of the at least one further computer network, determining whether the first computer is available to receive the e-mail.

2. The method of Claim 1, including, if the first computer is not available to receive the e-mail, temporarily storing the e-mail.

3. The method of Claim 2, wherein said temporarily storing step includes temporarily storing the e-mail within the first computer network independently of the at least one further computer network.

4. The method of Claim 3, wherein said temporarily storing step includes determining that a second computer in the first computer network is available to receive the e-mail, delivering the e-mail to the second computer and storing the e-mail in the second computer.

5. The method of Claim 4, including, after said step of storing the e-mail in the second computer, periodically notifying the first computer that the e-mail is available for delivery to the first computer.

6. A computer apparatus for operation in a first computer network that includes a plurality of computers and has data communication connectivity to at least one further computer network, comprising:
a destination selector for selecting within the first computer network a first computer to which an e-mail should be delivered;
a communication interface coupled to said destination selector for signaling to the first computer, independently of the at least one further computer network, that the e-mail is available for delivery to the first computer, said communication interface further for providing, independently of the at least one further computer network, an indication of whether the first computer is available to receive the e-mail; and
said destination selector responsive to said indication for providing the e-mail for transmission to one of the first computer and a further computer in the first computer network.

7. The apparatus of Claim 6, wherein the first computer is the intended destination of the e-mail, and said indication is that the first computer is unavailable to receive the e-mail, said destination selector responsive to said indication for providing the e-mail for transmission to the further computer, and wherein the further computer is for temporarily storing the e-mail while the e-mail is enroute to the first computer.

8. The apparatus of Claim 6, wherein the first computer and the further computer are candidates for temporarily storing the e-mail while the e-mail is enroute to its intended destination, and said indication is that the first computer is unavailable to receive the e-mail, said destination selector responsive to said indication for providing the e-mail for transmission to the further computer for temporary storage therein.

9. The apparatus of Claim 6, provided as one of a handheld computer, a laptop computer, a desktop computer and a router.

10. The apparatus of Claim 6, wherein said communication interface includes a SIP stack and said signaling includes SIP messaging.
